# EUROPÄISCHE PATENTANMELDUNG

(11) **EP 4 201 620 A1**
(43) Veröffentlichungstag der Anmeldung: **28.06.2023**
(21) Anmeldenummer: 21216663.1
(22) Anmeldetag: 21.12.2021
(51) Int. Cl.: B28B 7/08, B28B 17/00, B29C 33/30, G01B 5/24, G01B 7/34, G01B 11/26

(54) **ERSTELLEN EINER VERSCHALUNG**

(71) Anmelder: Schöck Bauteile GmbH, 76534 Baden-Baden (DE)
(72) Erfinder:
(74) Vertreter: König Szynka Tilmann von Renesse Patentanwälte Partnerschaft mbB Düsseldorf

(57) **Zusammenfassung**

Die Erfindung betrifft ein Verfahren zum Erstellen einer Verschalung für ein Betonfertigbauteil in einer Verschalungsumgebung (3) mit einem Bodenverschalungselement (1), bei dem eine Vorrichtung (5) zum Erfassen der Verschalungsumgebung (3) verwendet wird. Das Verfahren umfasst ein Ermitteln oder Einstellen einer Winkellage in mindestens einer ersten Richtung (r1) der Vorrichtung (5) zum Erfassen der Verschalungsumgebung (3) bezogen auf eine Ebene (E) im Wesentlichen quer zur Richtung der Erdbeschleunigung (g), und ein Ermitteln einer Winkellage des Bodenverschalungselements (1) in mindestens der ersten Richtung (R1), wobei mittels der Vorrichtung (5) zum Erfassen der Verschalungsumgebung (3) eine Abweichung der Winkellage des Bodenverschalungselements (1) in mindestens der ersten Richtung (r1) von der Ebene (E) im Wesentlichen quer zur Richtung der Erdbeschleunigung (g) festgestellt wird.

## Beschreibung

Die Erfindung betrifft ein Verfahren zum Erstellen einer Verschalung für ein Betonfertigbauteil, ein System zur Erstellung einer Verschalung für ein Betonfertigbauteil und eine Verwendung zum Erstellen einer Verschalung für ein Betonfertigbauteil.

Es ist bekannt, Betonfertigbauteile oder Bauabschnitte mittels einer Anordnung einer Schalung mit einer Bewehrung in der Schalung und einem Verfüllen der Schalung zumindest teilweise mit Beton herzustellen. Die Schalung wird als "Gussform" verwendet und nach dem Entschalen steht das Betonfertigbauteil zur Verfügung und kann zu einer Baustelle transportiert und dort eingesetzt bzw. verbaut werden.

Es hat sich gezeigt, dass es in der Praxis häufig zu Fehlern bzw. Abweichungen bei der Herstellung von Betonfertigbauteilen kommen kann, die zu einem Ausschuss führen können.

Aufgabe der Erfindung ist es, ein verbessertes Verfahren, ein verbessertes System und/oder eine verbesserte Verwendung zu schaffen, bei dem insbesondere die Maßhaltigkeit der Orientierung der äußeren Flächen des Betonfertigbauteils zueinander und/oder die Orientierung von einzelnen äußeren Flächen des Betonfertigbauteils zu einer Anbindungskomponente, beispielsweise einem Wärmedämmelement, einem Trittschalldämmelement, einem thermisch trennenden Befestigungselement, einem Schub- und Schwerlastdorn, einer Transportankerhülse, einer Ankerschiene, einer Gitterhülse und einer Durchstanzbewehrung, möglich ist. Insbesondere kann die Neigung mindestens einer oder mehrerer der Großflächen des Betonfertigbauteils zur Richtung quer zur Erdbeschleunigung optimiert werden.

Die Aufgabe wird gemäß den Gegenständen der unabhängigen Ansprüche gelöst. Bevorzugte Ausführungsformen ergeben sich aus der Beschreibung und den abhängigen Ansprüchen.

Kerngedanke der vorliegenden Erfindung ist es, eine Hilfestellung für eine korrekte Positionierung der Verschalung anzugeben, wobei auf ein Bodenverschalungselement abgestellt wird, welches dann als Bezugspunkt für weitere Verschalungselemente verwendet werden kann. Es kann eine Winkellage des Bodenverschalungselements in mindestens einer ersten Richtung ermittelt werden. Die Winkellage in der ersten Richtung kann eine Abweichung von der Ebene im Wesentlichen quer zur Richtung der Erdbeschleunigung angeben und festgestellt werden. Obwohl das Betonfertigbauteil erst auf der Baustelle mit einem anderen Bauteil zusammengefügt bzw. verbunden wird, kann durch eine Berücksichtigung der Neigung des Bodenverschalungselements schon eine Referenzierung geschaffen werden, mittels derer die Fläche des Betonfertigbauteils, die dem Bodenverschalungselement zugewandt ist und/oder die Fläche des Betonfertigbauteils, die der Fläche, die dem Bodenverschalungselement zugewandt ist, gegenüberliegt, in seiner Neigung in mindestens der ersten Richtung ausgerichtet werden kann. Die korrekte Ausrichtung kann beim Einbau auf der Baustelle bzw. beim Verbinden des Betonfertigbauteils mit einer Komponente auf der Baustelle schon als eingestellt berücksichtigt werden, so dass der Einbau vereinfacht und der Aufwand verringert werden kann.

Die Erfindung schafft ein Verfahren zum Erstellen einer Verschalung für ein Betonfertigbauteil in einer Verschalungsumgebung mit einem Bodenverschalungselement, bei dem eine Vorrichtung zum Erfassen der Verschalungsumgebung verwendet wird. Das Verfahren umfasst ferner die Schritte: a) Ermitteln oder Einstellen einer Winkellage in mindestens einer ersten Richtung der Vorrichtung zum Erfassen der Verschalungsumgebung bezogen auf eine Ebene im Wesentlichen quer zur Richtung der Erdbeschleunigung und b) Ermitteln einer Winkellage des Bodenverschalungselements in mindestens der ersten Richtung, wobei c) mittels der Vorrichtung zum Erfassen der Verschalungsumgebung eine Abweichung der Winkellage des Bodenverschalungselements in mindestens der ersten Richtung von der Ebene im Wesentlichen quer zur Richtung der Erdbeschleunigung festgestellt wird.

Der Begriff "Verschalung" umfasst im Sinne der Beschreibung eine aus Komponenten erstellte bzw. zu erstellende Gussform, in die der Beton zur Herstellung des Betonfertigbauteils eingebracht wird. Die Verschalung bzw. Gussform besteht in der Regel aus einzelnen Schalungselementen, wie beispielsweise einem Bodenverschalungselement. Es können mehrere Bodenverschalungselemente, die nebeneinander, insbesondere in einer Ebene, angeordnet sein können, vorgesehen sein. Die Anordnung der Schalungselemente zueinander ergibt die Gussform. Die Schalungselemente können aus Holz, Kunststoff oder Metall sowie aus einer Kombination der genannten Materialien bestehen. In der Verschalung kann eine Bewehrung vor dem Befüllen mit Beton angeordnet werden, die das fertige Betonfertigbauteil verstärken kann.

Der Begriff "Bewehrung" umfasst im Sinne der Beschreibung ein auch Armierung genanntes Gebilde, welches üblicherweise aus Baustahl, Bewehrungsstahl, Betonstahl, Glasfasern, Carbonfasern, Aramid und/oder einer Kombination der genannten Materialien hergestellt sein kann. Die Bewehrung kann einzelne miteinander verbundene Elemente bzw. Komponenten aufweisen.

Im Sinne der Beschreibung umfasst der Begriff "Betonfertigbauteil" ein Fertigbauteil zur Verwendung auf einer Baustelle. Das Betonfertigbauteil kann eine aus dem Beton herausgeführte Bewehrung aufweisen, die dazu dienen kann, das Betonfertigbauteil auf der Baustelle mit einem anderen Element oder einer Komponente zu verbinden. Beispielsweise kann die aus dem Betonfertigbauteil geführte Bewehrung so in bzw. an eine(r) Bewehrung eines anderen Elements angeordnet werden und dieser Bereich mit Beton verfüllt werden.

Das Betonfertigbauteil kann zwei Großflächen aufweisen, die im Wesentlichen parallel zueinander verlaufen können und die mittels umlaufender Seitenflächen miteinander verbunden sein können.

Der Begriff "Verschalungsumgebung" umfasst im Sinne der Beschreibung den Bereich der Fertigung, die für das Betonfertigbauteil vorgesehen ist. Der Bereich kann innerhalb einer Fabrikhalle, einem Betonfertigbauteilwerk oder dergleichen vorliegen. Der Begriff Verschalungsumgebung kann dabei den näheren Bereich, der für die Fertigung des Betonfertigbauteils vorgesehen ist, umfassen, so dass insbesondere die gesamte Verschalung als auch ein Randbereich, der sich an die seitliche Verschalung außen anschließt, als Verschalungsumgebung angesehen werden kann.

Der Begriff "Vorrichtung zum Erfassen der Verschalungsumgebung" umfasst eine Vorrichtung, die mindestens einen Sensor aufweist, mit dem die Verschalungsumgebung erfasst werden kann. Bei dem Sensor kann es sich im Sinne der Beschreibung um jedwedes technische Bauteil handeln, mit dem die Verschalungsumgebung erfasst werden kann. Insbesondere kann es sich bei dem Sensor um ein technisches Bauteil handeln, mit dem die Lage des Bodenverschalungselements im Raum bezogen auf die Vorrichtung zum Erfassen der Verschalungsumgebung bestimmt werden kann. Insbesondere kann es sich bei dem Sensor um einen optischen Sensor, einen akustischen Sensor (Schallsensor), einen mechanischen/taktilen Sensor und/oder einen induktiven Sensor handeln. Es kann auch mehr als ein Sensor oder mehr als eine Sensorart vorgesehen sein. Sofern mehr als ein Sensor vorgesehen ist, können die Sensoren unterschiedlicher oder gleicher Art sein. Bevorzugt kann ein Sensor eine Kombination der vorgenannten Ausgestaltungen der Sensoren sein, wobei eine Ausgestaltung mit zwei oder mehr Arten von Sensoren bevorzugt sein kann. Mittels unterschiedlicher Sensoren und/oder einer Kombination von Sensorarten in einem Sensor können unterschiedliche Ausgestaltungen von Verschalung und/oder Bodenverschalungselement erfasst werden.

Bei dem Sensor kann es sich insbesondere um einen optischen Sensor handeln. Es ist beispielsweise möglich, dass die Vorrichtung zum Erfassen der Verschalungsumgebung das Bodenverschalungselement bzw. die Verschalungsumgebung optisch erfasst. Es kann sein, dass der Sensor das Bodenverschalungselement bzw. die Verschalungsumgebung optisch abtastet. Die Abtastung kann nach einem Muster, beispielsweise zeilen- und/oder spaltenweise, nach dem Prinzip einer Laufzeitvermessung erfolgen. Es kann zusätzlich oder alternativ vorgesehen sein, dass eine optische Abtastung des Bodenverschalungselements bzw. der Verschalungsumgebung durch eine Projektion eines Musters auf die Verschalungsumgebung erfolgt bzw. diese unterstützt. Es kann ein vorbestimmtes Muster auf das Bodenverschalungselement bzw. die Verschalungsumgebung projiziert werden, wobei die Projektion des Musters erfasst werden kann. Aus den Abweichungen zwischen dem vorbestimmten Muster und der Projektion kann die Lage des Bodenverschalungselements bzw. die Lage der Verschalungsumgebung ermittelt werden. Beispielsweise kann eine Neigung, eine Wölbung, ein Abstand und ähnliches aus der Abweichung bezogen auf die Lage bzw. Neigung der Vorrichtung ermittelt werden.

Im Sinne der Beschreibung umfasst der Begriff "mittels der Vorrichtung zum Erfassen der Verschalungsumgebung" im Zusammenhang mit der Ermittlung einer Winkellage sowohl die Ausgestaltung, dass die Vorrichtung die Winkellage ermittelt, als auch, dass die Vorrichtung die Daten bzw. die Information für eine Ermittlung der Winkellage weitergibt. Es kann vorgesehen sein, dass die Vorrichtung zum Erfassen der Verschalungsumgebung körperlich in einem Gehäuse ein, insbesondere frei programmierbares, Rechenwerk (Maschine oder elektronische Schaltung), beispielsweise in Form eines (Mikro-)Prozessors, (Mikro-)Controllers oder ähnlichem, aufweist. Mittels des Rechenwerks kann die Ermittlung der Winkellage vorgenommen werden. Es ist auch möglich, dass die Vorrichtung zum Erfassen der Verschalungsumgebung Signale oder Daten an ein Rechenwerk übermittelt, das außerhalb eines Gehäuses der Vorrichtung zum Erfassen der Verschalungsumgebung vorhanden ist und nicht zu der Vorrichtung zum Erfassen der Verschalungsumgebung an sich gehört. Das genannte Rechenwerk kann mit der Vorrichtung zum Erfassen der Verschalungsumgebung kabellos oder kabelgebunden verbunden sein. Insoweit ein außerhalb der Vorrichtung zum Erfassen der Verschalungsumgebung vorhandenes Rechenwerk beschrieben ist, so kann das Rechenwerk die Vorrichtung zum Erfassen der Verschalungsumgebung steuern, so dass die Vorrichtung zum Erfassen der Verschalungsumgebung keine eigene Steuereinheit körperlich in einem Gehäuse aufweisen muss.

Der Begriff "Richtung der Erdbeschleunigung" umfasst im Sinne der Beschreibung die Richtung des Erdschwerefelds und fällt zusammen mit im Wesentlichen der Richtung der Fallbeschleunigung bzw. Lotrichtung. Abweichungen, die beispielsweise durch die Corioliskraft bewirkt werden, sind dabei im Rahmen der Toleranz inbegriffen.

Der Begriff "quer" im Sinne der Beschreibung ist eine Richtungsangabe bzw. geometrische Angabe relativ zu einer weiteren Richtung. Der Begriff "quer" umfasst den rechten Winkel, aber auch Abweichungen von diesem. Die Angabe "quer" umfasst einen mit der Bezugsrichtung eingeschlossenen Winkel im Bereich von ungefähr 5° bis 175°, bevorzugt zwischen ungefähr 20° und ungefähr 160°, mehr bevorzugt zwischen ungefähr 35° und ungefähr 145°, insbesondere bevorzugt zwischen ungefähr 50° und ungefähr 130°, ganz besonders bevorzugt zwischen ungefähr 65° und ungefähr 115°, ganz besonders bevorzugt zwischen ungefähr 70° und ungefähr 110°. Ganz besonders bevorzugt umfasst der Begriff "quer" den Einschluss eines Winkels im Bereich von 80° und ungefähr 100°.

Der Begriff "Winkellage" im Sinne der Beschreibung umfasst die Angabe einer Abweichung von der Parallelität zweier Richtungen, Linien, Strahlen bzw. Ebenen, wobei mit der Winkellage ein Winkel angegeben wird, der zwischen den beiden in Bezug genommenen Richtungen, Linien, Strahlen bzw. Ebenen liegt.

Sofern auf die Winkellage eines Elements, insbesondere des Bodenverschalungselements, abgestellt wird, so kann hierunter verstanden werden, dass eine (Außen-)Fläche des Elements eine entsprechende Winkellage aufweist. Soweit eine Parallelität gegenüberliegender Flächen vorliegt, so kann die Winkellage einer Fläche der Winkellage der gegenüberliegenden, parallelen Fläche entsprechen. Insbesondere kann bei dem Bodenverschalungselement auf eine Fläche zur Ermittlung der Winkellage abgestellt werden, die der Großfläche des Betonfertigbauteils zugewandt ist.

In einer bevorzugten Ausführungsform umfasst das Verfahren ein Ermitteln oder Einstellen einer Winkellage der Vorrichtung zum Erfassen der Verschalungsumgebung in mindestens einer zweiten Richtung, die zur ersten Richtung unterschiedlich ist, bezogen auf eine Ebene im Wesentlichen quer zur Richtung der Erdbeschleunigung. Ferner umfasst das Verfahren in einer bevorzugten Ausführungsform ein Ermitteln einer Winkellage des Bodenverschalungselements in mindestens der zweiten Richtung, wobei mittels der Vorrichtung zum Erfassen der Verschalungsumgebung eine Abweichung der Winkellage des Bodenverschalungselements in der zweiten Richtung von der Ebene im Wesentlichen quer zur Richtung der Erdbeschleunigung festgestellt wird. Hierdurch kann eine Ausrichtung des Bodenverschalungselements in zwei Richtungen erfolgen, um die Maßhaltigkeit und Genauigkeit des herzustellenden Betonfertigbauteils zu vergrößern.

In einer bevorzugten Ausführungsform umfasst das Verfahren ein Ermitteln einer Soll-Winkellage des Bodenverschalungselements mittels der Vorrichtung zum Erfassen der Verschalungsumgebung und ein Ausgeben einer Bestätigung, wenn die ermittelte Winkellage der Soll-Winkellage entspricht. Hierdurch kann neben einer Feststellung einer Abweichung ein Verfahren geschaffen werden, welches dem Nutzer, der eine Verschalung für ein Betonfertigbauteil erstellt, weiter unterstützt, indem beispielsweise erst dann eine "positive" Bestätigung ausgegeben wird, wenn eine ermittelte Ist-Winkellage einer Soll-Winkellage im Rahmen von Toleranzen entspricht. Beispielsweise kann eine Abweichung von +/- 1°, bevorzugt +/- 0,5° noch zugelassen werden.

Im Sinne der Beschreibung umfasst der Begriff "Bestätigung" eine optische, akustische, mechanische (taktile) Bestätigung, die von dem Nutzer, der eine Verschalung für ein Betonfertigbauteil erstellen soll, wahrgenommen werden kann. Die Bestätigung kann auf mehrere der genannten Arten erfolgen, beispielsweise ist sowohl eine optische als auch eine akustische Bestätigung möglich.

In einer bevorzugten Ausführungsform kann eine Ausgabe der Bestätigung auf einer Anzeigevorrichtung für einen Nutzer erfolgen. Die Bestätigung wird auf einer vom Nutzer tragbaren Anzeigevorrichtung ausgegeben. Beispielsweise kann die Anzeigevorrichtung als brillenartige Anzeigevorrichtung oder als in einer Hand oder mehreren Händen tragbare display- oder monitorartige Anzeigevorrichtung ausgestaltet sein. Auf der Anzeigevorrichtung kann neben der Bestätigung, beispielsweise ausgegeben werden - bevor die Soll-Winkellage erreicht wurde - wie groß und in welcher Richtung die Abweichung vorliegt. Insofern wird nicht nur eine Bestätigung signalisiert, die den Nutzer unterstützt, sondern auch eine Hilfestellung, wie das Bodenverschalungselement zum Erreichen der Soll-Winkellage geneigt bzw. gekippt werden muss. Eine brillenartige Anzeigevorrichtung kann, sofern die Anzeige in das Brillenglas oder ähnliches projiziert wird, eine Wahrnehmung der Umgebung zusätzlich zur angezeigten Information ermöglichen, so dass während der Korrektur eine Auswirkung auf die Soll-Winkellage erfasst werden kann. Zudem kann eine brillenartige Anzeigevorrichtung ermöglichen, dass der Nutzer ohne Beeinträchtigung eines Haltens der Anzeigevorrichtung ist.

In einer bevorzugten Ausführungsform umfasst das Verfahren ein automatisches Ausrichten der Winkellage des Bodenverschalungselements mittels einer Vorrichtung zum Neigen des Bodenverschalungselements in der ersten und/oder zweiten Richtung gemäß einer Soll-Winkellage. Hierdurch kann der Nutzer, der eine Verschalung für ein Betonfertigbauteil erstellen soll, weiter unterstützt werden. Es ist möglich, dass eine Kommunikation zwischen der Vorrichtung zum Neigen des Bodenverschalungselements und der Vorrichtung zum Erfassen der Verschalungsumgebung oder einem mit der Vorrichtung zum Erfassen der Verschalungsumgebung verbundenen Rechenwerk hergestellt werden kann, damit das Verfahren in einem größeren Maße automatisiert werden kann. Eine Halbautomatisierung ist ebenfalls möglich.

Eine Vorrichtung zum Neigen des Bodenverschalungselements kann eine Plattform aufweisen, auf der das Bodenverschalungselement aufgelegt werden kann. Die Plattform kann händisch oder mittels Aktuatoren geneigt bzw. in zwei Richtungen, insbesondere den zuvor genannten beiden Richtungen, gekippt bzw. geneigt werden.

In einer bevorzugten Ausführungsform umfasst das Verfahren ein Protokollieren der ermittelten und/oder eingestellten Winkellage der Vorrichtung zum Erfassen der Verschalungsumgebung und/oder der ermittelten Winkellage des Bodenverschalungselements. Hierdurch kann die Möglichkeit eröffnet werden, die für die Herstellung eines Betonfertigbauteils verwendeten Parameter festzuhalten und/oder als Qualität bzw. Güte speziell für das gefertigte Betonfertigbauteil angeben zu können.

In einer bevorzugten Ausführungsform umfasst das Verfahren ein Anordnen eines Maßes für einen Referenzabstand an dem Bodenverschalungselement in der ersten und/oder in der zweiten Richtung. Hierdurch kann auf dem bzw. an dem Bodenverschalungselement ein vorbestimmter Referenz-Abstand angeordnet werden, der mittels der Vorrichtung zum Erfassen der Verschalung Umgebung erfasst werden kann. In Kenntnis des Referenzabstands kann eine verbesserte Auswertung erfolgen, indem der Vergleich zwischen dem gemessenen Referenzabstand und dem vorbestimmten, bekannten Referenzabstand in die Ermittlung der Winkellage eingehen kann.

In einer bevorzugten Ausführungsform umfasst das Verfahren ein Anordnen einer Vorrichtung zur Ermittlung einer Winkellage an dem Bodenverschalungselement oder in der Nähe des Bodenverschalungselements, wobei die Vorrichtung zur Ermittlung einer Winkellage ausgestaltet ist, die Winkellage des Bodenverschalungselements in der ersten Richtung und/oder in der zweiten Richtung zu ermitteln. Ferner umfasst das Verfahren bevorzugt ein Kommunizieren der mittels der Vorrichtung zur Ermittlung einer Winkellage ermittelten Winkellage an die Vorrichtung zum Erfassen der Verschalungsumgebung bzw. ein mit der Vorrichtung zum Erfassen der Verschalungsumgebung verbundenes Rechenwerk. Durch die Ermittlung einer Winkellage an dem Bodenverschalungselement mittels einer Vorrichtung kann die Genauigkeit erhöht und/oder die Flexibilität, wie die Winkellage des Bodenverschalungselements erfasst werden kann, vergrößert werden. Es können einfache Vorrichtungen verwendet werden.

Sofern beschrieben ist, dass die von der Vorrichtung zur Ermittlung einer Winkellage an dem Bodenverschalungselement festgestellte Winkellage an die Vorrichtung zum Erfassen der Verschalungsumgebung kommuniziert wird, so wird hierunter jedwede Kommunikation verstanden, die insbesondere kabelgebunden oder kabellos erfolgen kann. Es ist eine automatische Kommunikation möglich, bei der es keiner Freigabe oder Weiterleitung durch einen Nutzer bedarf. Es kann auch eine halbautomatische Kommunikation möglich sein, bei der es der Eingabe eines Nutzers, insbesondere in Form einer Freigabe der Weiterleitung der Daten durch den Nutzer, bedarf. Es kann auch vorgesehen sein, dass der Nutzer die Winkellage händisch übermittelt. Mischformen der genannten Kommunikationen sind möglich.

In einer bevorzugten Ausführungsform umfasst das Verfahren ein Einstellen der Winkellage der Vorrichtung zum Erfassen der Verschalungsumgebung in der ersten Richtung im Wesentlichen parallel zu der Ebene im Wesentlichen quer zur Richtung der Erdbeschleunigung. Hierdurch kann ein Referenzpunkt geschaffen werden, mit dem eine absolute Messung der Winkellage des Bodenverschalungselements möglich ist. Die absolute Messung kann dabei direkt in Beziehung zu der Richtung bzw. Anordnung der Vorrichtung zum Erfassen der Verschalungsumgebung gesetzt werden.

In einer bevorzugten Ausführungsform umfasst das Verfahren ein Einstellen der Winkellage der Vorrichtung zum Erfassen der Verschalungsumgebung in der zweiten Richtung im Wesentlichen parallel zu der Ebene im Wesentlichen quer zur Richtung der Erdbeschleunigung. Hierdurch wird eine Referenz in zwei Richtungen für die Vorrichtung zum Erfassen der Verschalung Umgebung vorgegeben. Eine von der Vorrichtung zum Erfassen der Verschalung Umgebung erfasste bzw. an die Vorrichtung zum Erfassen der Verschalungsumgebung kommunizierte Abweichung der Lage des Bodenverschalungselements zur Vorrichtung zum Erfassen der Verschalungsumgebung gibt einen absoluten Wert vor.

In einer bevorzugten Ausführungsform umfasst das Verfahren ein Wählen der ersten und zweiten Richtung, sodass die erste und zweite Richtung einen Winkel von mindestens 10°, bevorzugt mindestens 20°, bevorzugt mindestens 30°, bevorzugt mindestens 40°, bevorzugt mindestens 50°, bevorzugt mindestens 60°, bevorzugt mindestens 70°, bevorzugt mindestens 80°, insbesondere bevorzugt im Wesentlichen 90°, zueinander einschließen. Es ist eine flexible Einstellung der zwei Richtungen bzw. des von den beiden Richtungen eingeschlossenen Winkels möglich. Bei der Verwendung eines rechten Winkels, d. h. 90°, ist eine einfache Ausrichtung möglich.

Die Erfindung schafft auch ein System zur Erstellung einer Verschalung für ein Betonfertigbauteil in einer Verschalungsumgebung mit einem Bodenverschalungselement, wobei das System insbesondere zum Durchführen des in der Beschreibung beschriebenen Verfahrens ausgestaltet ist. Das System umfasst eine Vorrichtung zum Erfassen der Verschalungsumgebung, wobei die Vorrichtung ausgestaltet ist, ein Maß zu speichern, das mit einer Winkellage in mindestens einer ersten Richtung der Vorrichtung zum Erfassen der Verschalungsumgebung bezogen auf eine Ebene im Wesentlichen quer zur Richtung der Erdbeschleunigung korrespondiert. Die Vorrichtung zum Erfassen der Verschalungsumgebung ist weiter ausgestaltet, eine Abweichung der Winkellage des Bodenverschalungselements in mindestens der ersten Richtung von der Ebene im Wesentlichen quer zur Richtung der Erdbeschleunigung festzustellen.

Die Erfindung schafft auch eine Verwendung zum Erstellen einer Verschalung für ein Betonfertigbauteil in einer Verschalungsumgebung mit einem Bodenverschalungselement. Es wird eine Vorrichtung zum Erfassen der Verschalungsumgebung verwendet und die Vorrichtung zum Erfassen der Verschalungsumgebung stellt eine Abweichung der Winkellage des Bodenverschalungselements in mindestens einer ersten Richtung von der Ebene im Wesentlichen quer zur Richtung der Erdbeschleunigung fest.

Sofern in der Beschreibung ein Verfahren, eine Verwendung und ein System beschrieben werden, so ergänzen die Ausführung der einzelnen Aspekte einander. Insbesondere gelten die Ausführungen zum Verfahren für den Aspekt der Verwendung und den Aspekt des Systems.

Die vorstehenden Ausführungen stellen ebenso wie die nachfolgende Beschreibung beispielhafter Ausführungsformen keinen Verzicht auf bestimmte Ausführungsformen oder Merkmale da.

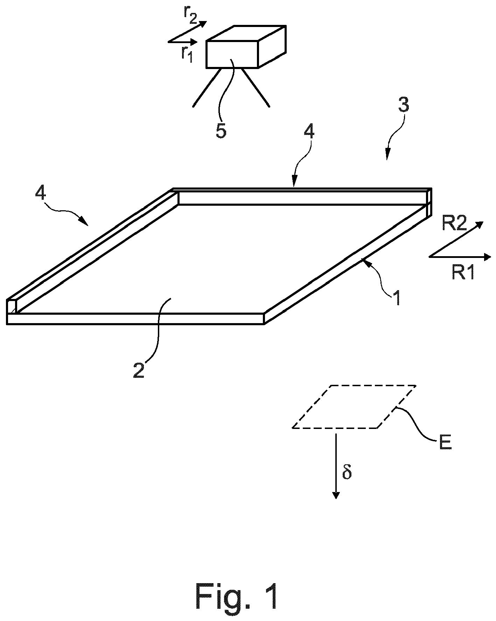

In der Zeichnung zeigt Fig. 1 schematisch in einer isometrischen Darstellung ein System zur Erstellung einer Verschalung für ein Betonfertigbauteil in einer Verschalungsumgebung.

Fig. 1 zeigt ein Bodenverschalungselement 1 mit einer Fläche 2, die der Fläche des zu erstellenden Betonfertigbauteils zugewandt ist. Das Bodenverschalungselement 1 ist in einer Verschalungsumgebung 3 mit weiteren Verschalungselementen 4 angeordnet, wobei die Verschalungselemente 4 eine seitliche Verschalung für das Betonfertigbauteil bilden.

Das System weist eine Vorrichtung 5 zum Erfassen der Verschalungsumgebung 3 auf. Die Vorrichtung 5 ist ausgestaltet, ein Maß zu speichern, das mit einer Winkellage in mindestens einer ersten Richtung r1 der Vorrichtung 5 zum Erfassen der Verschalungsumgebung 3 bezogen auf eine Ebene E im Wesentlichen quer zur Richtung der Erdbeschleunigung g korrespondiert. Im dargestellten Ausführungsbeispiel ist die Vorrichtung 5 zum Erfassen der Verschalungsumgebung 3 in mindestens der ersten Richtung r1 mit seiner Winkellage bezogen auf die Ebene im Wesentlichen quer zur Richtung der Erdbeschleunigung g eingestellt worden, so dass die Winkellage als das gespeicherte Maß bekannt ist und/oder beispielweise 0° beträgt.

Das Bodenverschalungselement 1 bzw. die Fläche 2 des Bodenverschalungselements 1 wird mittels der Vorrichtung 5 zum Erfassen der Verschalungsumgebung 3 optisch abgetastet, um mittels der Vorrichtung 5 zum Erfassen der Verschalungsumgebung 3 eine Abweichung der Winkellage des Bodenverschalungselements 1 in mindestens einer ersten Richtung R1 von der Ebene E im Wesentlichen quer zur Richtung der Erdbeschleunigung g festzustellen, wobei die Richtungen r1 und R1 im dargestellten Ausführungsbeispiel gleich sind bzw. parallel zueinander verlaufen. So kann die Winkellage des Bodenverschalungselements 1 in mindestens der ersten Richtung R1 bezogen auf die Ebene E quer zur Richtung der Erdbeschleunigung g festgestellt werden.

Die Vorrichtung 5 zum Erfassen der Verschalungsumgebung 3 kann in der dargestellten Ausführungsform in Bezug auf eine Winkellage in mindestens einer zweiten, zur ersten Richtung r1 unterschiedlichen Richtung r2 der Vorrichtung 5 zum Erfassen der Verschalungsumgebung 3 bezogen auf die Ebene E im Wesentlichen quer zur Richtung der Erdbeschleunigung g eingestellt oder bestimmt werden.

Es kann die Winkellage des Bodenverschalungselements 1 in mindestens der zweiten Richtung R2 mittels der Vorrichtung 5 zum Erfassen der Verschalungsumgebung 3 ermittelt werden, wobei im dargestellten Ausführungsbeispiel die Richtungen R2 und r2 parallel zueinander sind bzw. sich entsprechen.

## Patentansprüche

1. Verfahren zum Erstellen einer Verschalung für ein Betonfertigbauteil in einer Verschalungsumgebung (3) mit einem Bodenverschalungselement (1), bei dem eine Vorrichtung (5) zum Erfassen der Verschalungsumgebung (3) verwendet wird, wobei das Verfahren umfasst:
Ermitteln oder Einstellen einer Winkellage in mindestens einer ersten Richtung (r1, R1) der Vorrichtung (5) zum Erfassen der Verschalungsumgebung (3) bezogen auf eine Ebene (E) im Wesentlichen quer zur Richtung der Erdbeschleunigung (g) und
Ermitteln einer Winkellage des Bodenverschalungselements (1) in mindestens der ersten Richtung (r1, R1), wobei mittels der Vorrichtung (5) zum Erfassen der Verschalungsumgebung (3) eine Abweichung der Winkellage des Bodenverschalungselements (1) in mindestens der ersten Richtung (r1, R1) von der Ebene (E) im Wesentlichen quer zur Richtung der Erdbeschleunigung (g) festgestellt wird.

2. Verfahren nach Anspruch 1, umfassend:
Ermitteln oder Einstellen einer Winkellage in mindestens einer zweiten zur ersten Richtung unterschiedlichen Richtung (r2, R2) der Vorrichtung (5) zum Erfassen der Verschalungsumgebung (3) bezogen auf eine Ebene (E) im Wesentlichen quer zur Richtung der Erdbeschleunigung (g) und
Ermitteln einer Winkellage des Bodenverschalungselements (1) in mindestens der zweiten Richtung (r2, R2), wobei mittels der Vorrichtung (5) zum Erfassen der Verschalungsumgebung (3) eine Abweichung der Winkellage des Bodenverschalungselements (1) in der zweiten Richtung (r2, R2) von der Ebene (E) im Wesentlichen quer zur Richtung der Erdbeschleunigung (g) festgestellt wird.

3. Verfahren nach Anspruch 1 oder 2, umfassend:
Ermitteln einer Soll-Winkellage des Bodenverschalungselements (1) mittels der Vorrichtung (5) zum Erfassen der Verschalungsumgebung (3) und Ausgeben einer Bestätigung, wenn die ermittelte Winkellage der Soll-Winkellage entspricht.

4. Verfahren nach Anspruch 3, umfassen:
Ausgeben der Bestätigung auf einer Anzeigevorrichtung für einen Nutzer, wobei die Bestätigung auf einer vom Nutzer tragbaren Anzeigevorrichtung ausgegeben wird.

5. Verfahren nach einem der Ansprüche 1 bis 4, umfassend:
Automatisches Ausrichten der Winkellage des Bodenverschalungselements (1) mittels einer Vorrichtung zum Neigen des Bodenverschalungselements (1) in der ersten und/oder zweiten Richtung gemäß einer Soll-Winkellage.

6. Verfahren nach einem der Ansprüche 1 bis 5, umfassend:
Protokollieren der ermittelten und/oder eingestellten Winkellage der Vorrichtung (5) zum Erfassen der Verschalungsumgebung (3) und/oder der ermittelten Winkellage des Bodenverschalungselements (1).

7. Verfahren nach einem der Ansprüche 1 bis 6, umfassend:
Anordnen eines Maßes für einen Referenzabstand an dem Bodenverschalungselement (1) in der ersten und/oder zweiten Richtung (r1, R1; r2, R2).

8. Verfahren nach einem der Ansprüche 1 bis 7, umfassend:
Anordnen einer Vorrichtung zur Ermittlung einer Winkellage an dem Bodenverschalungselement (1) oder in der Nähe des Bodenverschalungselements (1), wobei die Vorrichtung zur Ermittlung einer Winkellage ausgestaltet ist, die Winkellage des Bodenverschalungselements (1) in der ersten Richtung (r1, R1) und/oder in der zweiten Richtung (r2, R2) zu ermitteln und
Kommunizieren der mittels der Vorrichtung zur Ermittlung einer Winkellage ermittelten Winkellage an die Vorrichtung (5) zum Erfassen der Verschalungsumgebung (3).

9. Verfahren nach einem der Ansprüche 1 bis 8, umfassend:
Einstellen der Winkellage der Vorrichtung (5) zum Erfassen der Verschalungsumgebung (3) in der ersten Richtung (r1, R1) parallel zu der Ebene (E) im Wesentlichen quer zur Richtung der Erdbeschleunigung (g).

10. Verfahren nach einem der Ansprüche 1 bis 9, umfassend:
Einstellen der Winkellage der Vorrichtung (5) zum Erfassen der Verschalungsumgebung (3) in der zweiten Richtung (r2, R2) parallel zu der Ebene (E) im Wesentlichen quer zur Richtung der Erdbeschleunigung (g).

11. Verfahren nach einem der Ansprüche 1 bis 10, umfassend:
Wählen der ersten und zweiten Richtung (r1, R1; r2, R2), so dass die erste und zweite Richtung (r1, R1; r2, R2) einen Winkel von mindestens 10°, insbesondere 90°, zueinander einschließen.

12. System zur Erstellung einer Verschalung für ein Betonfertigbauteil in einer Verschalungsumgebung (3) mit einem Bodenverschalungselement (1), wobei das System insbesondere zum Durchführen des Verfahrens nach einem der Ansprüche 1 bis 11 ausgestaltet ist, und das System umfasst:
eine Vorrichtung (5) zum Erfassen der Verschalungsumgebung (3), wobei die Vorrichtung (5) ausgestaltet ist, ein Maß zu speichern, das mit einer Winkellage in mindestens einer ersten Richtung (r1, R1) der Vorrichtung (5) zum Erfassen der Verschalungsumgebung (3) bezogen auf eine Ebene (E) im Wesentlichen quer zur Richtung der Erdbeschleunigung (g) korrespondiert und
die Vorrichtung (5) zum Erfassen der Verschalungsumgebung (3) weiter ausgestaltet ist, eine Abweichung der Winkellage des Bodenverschalungselements (1) in mindestens der ersten Richtung (r1, R1) von der Ebene (E) im Wesentlichen quer zur Richtung der Erdbeschleunigung (g) festzustellen.

13. Verwendung zum Erstellen einer Verschalung für ein Betonfertigbauteil in einer Verschalungsumgebung (3) mit einem Bodenverschalungselement (1), bei dem eine Vorrichtung (5) zum Erfassen der Verschalungsumgebung (3) verwendet wird und die Vorrichtung (5) zum Erfassen der Verschalungsumgebung (3) verwendet wird, eine Abweichung der Winkellage des Bodenverschalungselements (1) in mindestens einer ersten Richtung (r1, R1; r2, R2) von der Ebene (E) im Wesentlichen quer zur Richtung der Erdbeschleunigung (g) festzustellen.
